## Europäisches Patentamt
## European Patent Office
## Office européen des brevets

(19)

(11) Numéro de publication: **0 009 469**
**A1**

(12)

# DEMANDE DE BREVET EUROPEEN

(21) Numéro de dépôt: **79830012.5**

(22) Date de dépôt: **09.05.79**

(51) Int. Cl.³: **A 01 G 25/09, B 62 D 57/02**

(30) Priorité: **13.09.78 IT 8345978**

(43) Date de publication de la demande: **02.04.80**
**Bulletin 80/7**

(84) Etats contractants désignés: **AT BE CH DE FR GB LU NL SE**

(71) Demandeur: **Miotti, Valerio, n.127 Via Roma, I-33019 Tricesimo (Udine) (IT)**

(72) Inventeur: **Di Giorgio, Gailiano, n. 16 via Valbruna, I-33100 Udine (IT)**

(74) Mandataire: **D'Agostini, Giovanni, Dr., n. 17 via G.Giusti, I-33100 Udine (IT)**

(54) **Dispositif d'arrosage automoteur.**

(57) Dispositif d'arrosage automoteur, constitué par un système cylindre hydraulique (1) et piston lié à une tige (2) commandée en va-et-vient par un tuyau flexible sous pression d'eau (5), le cylindre (1) et la tige (2) étant dotés d'un pied (3, 4) à fourchette (a, b, c), de manière que lorsque la tige (2) sort du cylindre les pieds (3, 4) s'éloignent entre eux, et lorsque la tige (2) rentre ces deux pieds se rapprochent.

Les pieds sont réalisés de manière que dans un sens ils s'arc-boutent sur le terrain tandis que dans le sens contraire ils glissent de manière à faire avancer pas à pas le dispositif et dans le même temps d'arroser le terrain avec le déflecteur (9). Des moyens d'arrêt automatique (13, 14, 15, 16) et de réglage (12) de l'avancement et de l'arrosage sont également prévus.

EP 0 009 469 A1

## TITRE MODIFIÉ
### - 1 - voir page de garde

<u>Dispositif automatique autodéplaçable sur le terrain pour l'arroser.</u>

L'invention concerne un dispositif automatique autodéplaçable sur le terrain pour l'arroser.

Dans l'état de la technique actuelle on connait une grande variété de dispositifs automatiques pour l'arrosement dans son entour du terrain, mais on ne connait pas des disposi tifs automatiques de ce type d'être a même de se déplacer sur le terrain et dans le même temps d'arroser le dit ter rain dans son entour, et enoutre de se déplacer suivant des parcours établis par l'opérateur et modifiés suivant le désir.

La présente invention a pour but de realiser un dispositif automatique autodéplaçable sur le terrain pour l'arroser étant le dit dispositif doté de moyens tels que lui permet de servire des parcours établis à l'avance dans le terrain et enoutre de s'arreter automatiquement sans l'intervention humaine.

Un deuxième but de l'invention concerne le fait que pendant l'arrosement du terrain, le dispositif soit déplaçable à la vitesse desirée.

Un dernier but de l'invention concerne le fait que le dispo sitif soit de coût très bas, de la plus grande confiablété et très simple pour les eventuelles interventions d'entretien.

L'invention telle qu'elle est caracterisée dans les revendications, est constituée par un dispositif lequel comprend un système cylindre piston hydraulique commandé par un tuyau d'eau en matériel flexible où le dit piston est déplaçable par l'eau en va et viens entre le dit cylindre étant le dit piston lié à une tige, dispositif caracterisé en ce que soit le dit cylindre que l'extrémité du dite tige sortant du cylindre, sont dotés d'un appui sur le terrain dit pied, étant ces deux dits pieds réalisés en manière que lorsque on à un déplacement du dit piston avec son tige:

- dans un sens on puisse avoir que un premier pied se déplace dans le terrain tandis que le deuxième pied ne se déplace pas;

- dans le sens contraire on puisse avoir que le dit premier pied ne se déplace pas dans le terrain tandis que le deuxiem pied se déplace dans le dit terrain.

On obtiendra avec cela un déplacement du dit dispositif d'un pas correspondant au déplacement des dits pieds qui s'approchent et s'eloignent suivant le mouvement du dit piston dans le cylindre; dispositif caracterisé enoutre en ce que l'eau utilisée pour le déplacement des dits pieds vient laissée sortir du dit dispositif en pression dans son entour pour l'arrosement du terrain.

Un'autre caracteristique du dispositif concerne le fait qu'il est doté d'un lévier d'arrêt lequel puisse toucher dans l'avancement du dispositif un obstacle et pour cela arrêter l'avancement du dit dispositif empêchant le mouvement du dit piston et le passage de l'eau dans le dit dispositif pour arrêter l'arrosement du terrain.

Un'autre caractéristique de l'invention concerne le fait que la vitesse du déplacement du piston peut être reglée en utilisant dans le dispositif même un régulateur du flux de l'eau en entrée ou en sortie du cylindre pour le mouvement du dit piston.

Un'autre caractéristique du dispositif concerne le fait que les deux dits pieds sont deux fourchettes avec les dents pliées dans le même sens pour povoir enfourcher un tuyau flexible par exemple celui qui alimente l'eau ou autre forme de pied de manière que lorsqu'on a dépla cement des dits pieds ces pieds sont obligés à suivre le dit tuyau qui a été placé dans le terrain, pour établir le parcours qu'on désire faire suivre au dit dispositif, étant le pliage des dents établi pour l'avancement des pieds dans une seule direction sur le terrain.

Dans, ce qui suit, l'invention est exposée plus en detail à l'aide des dessins représentant seulement une mode de exécution.

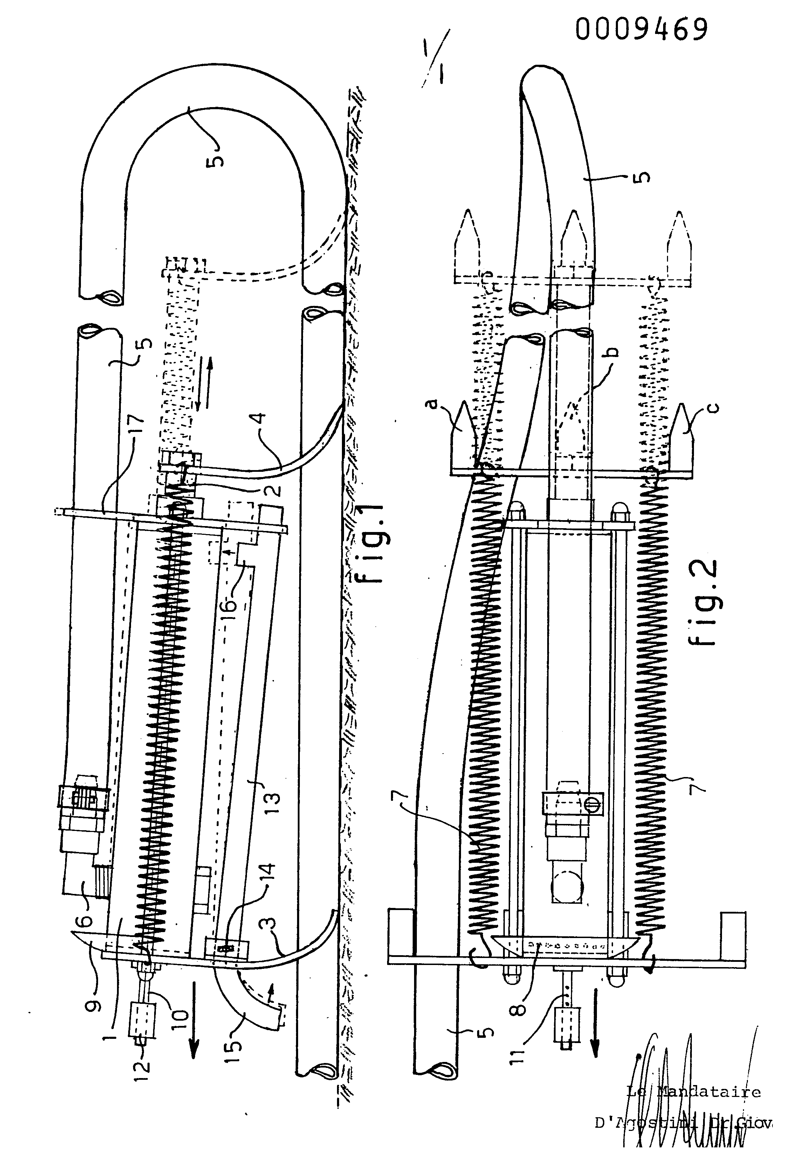

La figure 1 représente, en vue de côté, un dispositif réalisé conformément à la presente invention; la figure 2 représente une vue de plante du dispositif de figure 1.

Comme l'on peut voir dans les dites figures, le dispositif est constitué essentiellement par un cylindre hydraulique 1 contenant axialement déplaçable dans son intérieur un piston attaché à une tige 2 pour le faire sortir du cylindre 1, avec le dit mouvement axial.

Soit le dit cylindre 1 que la dite tige 2 sont doptés dans l'extremité opposée, d'un pied d'appui sur le terrain 3,4 respectivement à forme de fourchette à trois dents (a,b, c,) lesquels sont pliés dans la même direction comme l'on peut voir dans la fig.1 de manière que: .

- lorsque la tige 2 (comme indique en traits de ligne) sort du cylindre 1, la fourchette 4 s'enfonce avec ses dents dans le terrain tandis que l'autre fourchette 3 glisse sur le terrain s'eloignant de la première dans le sens indiqué par la flèche en déplaçant dans le mê me sens le cylindre 1;

- lorsque la tige 2 réentre dans le cylindre 1 la fourchet te 3 se fonce avec ses dents dans le terrain, tandis que la fourchette 4 glisse sur le terrain et pour cela, ne déplaçant pas le cylindre 1 mais approchant les deux fourchettes.

De cette manière avec répétition des deux dits mouvements on obtiendra l'avancement pas à pas du dispositif.


Naturellement la forme des deux pieds 3,4 et/ou le nombre des dents a,b,c,peut être varié, le pied peut être ainsi à lame pliée comme les dents ou à roues roulant dans une seu le direction.

Le mouvement de va et vien de la tige 2 est commandé dans le cylindre 1 par l'intermediaire du tuyau flexible d'eau en pression 5 attaché en 6 qui porte l'eau dans l'intérieur du cylindre 1.

L'eau déplace le piston (pas illustré du type commun) dans l'intérieur du cylindre 1 et la tige 2 sort du cylindre 1 en réalisant le premier avancement du dispositif.

Le rappel de la tige 2 (et par conséquent du piston) vient actué par l'intermediaire des deux ressorts de rappel 7 lesquels sont tendus lorsque la tige 2 est sortie de maniè re que venant à manquer la pression d'eau dans le cylindre 1 la tige 2 réentre de nouveau rapprochand les deux pieds.
Une telle opération est possible par l'utilisation dans
le dispositif d'une soupape de comand de l'eaudu type co
mun de manière que:

- lorsque la tige est réentrée l'eau du tuyau 5, parmi l'at
taque 6, soit canalisée dans l'intérieur de la chemise
du cylindre 1 pour déplacer le piston et faire sortir
la tige 2;

- lorsque la tige 2 est complétement sortie, l'eau soit
canalisée pour arroser le terrain dans l'entour du dispo
sitif, et dans le même temps on ouvre un écoulement de
l'eau qui était enfermé dans l'intérieur du cylindre et
cela à l'aide des dits ressorts 7. Pour cela le cylindre
1 présente plusieurs trous placés à demicircle 8 avec
un deflécteur 9 qui permettent la sortie de l'eau à even
tail en arrosant le terrain dans l'entour.

La soupape ou un'autre soupape liée à la première,commande
l'ouverture du dit écoulement à l'intérieur de la chemise
du cylindre 1 par l'intermediaire d'un tuyau 10, lequel
présente plusieurs trous 11 pour l'écoulement de l'eau du
cylindre 1 lorsque on a le rappel de la tige 2 à l'aide
des ressorts 7.

Le trous 11 peuvent êtres enfermés en nombre plus o moins
elevé avec un bouchon coaxial extérieur 12 glissable sur
le tuyau 10 en changeant avec son déplacement l'ouverture
de l'écoulement de l'eau et pour cela la vitesse du rappel
de la tige 2 ce qui porte à varier la vitesse d'avancement
du dispositif sur le terrain.

Entre les pieds 3 et 4, on à placé sous le cylindre 1 un
levier 13 articulé en 14 sous le cylindre 1 et avec une
partie de battue 15, sortant au dehors en avant du pied 3
et dopté de l'autre côté, sous le cylindre 1,d'un dent 16,

0009469

de manière que, lorsque le dispositif va toucher un obsta cle l'estremité 15 du levier 13 fait hausser le dent 16 lequel entre dans l'intérieur d'une gravure sous le dit cylindre 1 en bloquant la course de la tige 2 lorsqu'elle est sortie du cylindre 1, étant prévu que dans cette po sition la dite soupape bloque l'eau dans l'intérieur de la chemise du cylindre sans ouvrir l'écoulement ou les trous d'arrosement, et cela avec l'extremité du levier 15. Une ultérieure caractéristique concerne le fait que le tuyau 5 passe entre l'anneau 17 qui fait partie avec le cylindre 1 ensuite le tuyau 5 peut être déposé dans le terrain pour le parcours voulu et le dispositif vient de posé avec ses fourchettes 3,4 à colifourchon comme illu stré dans les fig.1,2 de manière que lorsque le dispositif se déplace avec les mouvements de ses pieds 3,4 il est obligé à suivre le tuyau 5 plein d'eau placé par terre; on pourra de cette manière établir le parcours voulu en utilisant le dit tuyau 5.

Notamment les particulièrs pas essentiels de l'invention pourrant bien changer sans pour cela modifier les caractè ristiques de l'invention comme revendiqué.

Le Mandataire

Dr.Giovanni D'Agostini

Revendications de brevet

1. Dispositif automatique autodéplaçable sur le terrain pour l'arroser, constitué par un système cylindre piston hydraulique commandé par un tuyau en pression d'eau en matériel flexible où le dit piston est déplaçable par l'eau entre le dit cylindre en va et vient, étant le dit piston lié à une tige,

caracterisé en ce que soit le dit cylindre que l'extremité de la dite tige sortant du cylindre, sont doptés d'un appui sur le terrain appelé d'ici en avant pied, de manière que lorsque on a la sortie du dite tige ces deux pieds se eloignent entre eux, et lorsque on a la réentrement de la dite tige ces deux pieds se rapprochent, étant les dits deux pieds réalisés et/ou formés en manière que dans un sens ils s'arc-boutent sur le terrain tandis que dans le sens contraire ils glissent et cela en manière que lorsque on à un déplacement du dit piston on puisse avoir:

- dans un sens, que un permier pied se déplace dans le terrain tandis que le deuxiem pied ne se déplace pas dans le dit terrain;

- dans le sens contraire, que le dit premier pied ne se déplace pas dans le terrain tandis que le deuxiem pied se déplace dans le dit terrain; permettant pour cela l'avancement pas à pas du dispositif sur le terrain; dispositif caracaterisé enoutre en ce que il comprend des moyens capables de faire sortir l'eau pour l'arrosement du terrain dans son entour.

2. Dispositif selon 1, caracterisé en ce que la sortie de la tige est commandée par l'envoi d'eau dans l'intérieur

0009469

du dit cylindre tandis que son rappel est réalisé par ressorts et

en ce qu'il est dopté d'une soupape d'arrêt et de reglage du flux d'eau, laquelle lorsqu'on réjoint la complète sortie de la tige: arrête le flux d'eau dans le cylindre et ouvre un conduit pour le déchargement du cylindre en permettant le rappel du piston avec la tige, tandis que vient ouvert le conduit pour l'arrosement du terrain.

3. Dispositif selon 1 ou 2 caractérisé en ce qu'il est dopté de moyens du reglage de l'eau anvoyé dans le cylindre ou déchargé du cylindre, pour varier la vitesse du mouvement de la dite tige et par conséquent la vitesse d'avancement.

4. Dispositif selon une quelconque des revendications 1 à 3 caractérisé en ce qu'il est dopté d'un lévier d'arrêt lequel puisse toucher dans l'avancement du dispositif un obstacle et pour cela arrêter l'avancement du dispositif et dans le même temps arrêter l'arrosement du terrain dans l'entour du dispositif.

5. Dispositif suivant unq quelconque des revendication précedentes, caractérisé en ce que ses pieds comportent au dessous de eux au moins une channellure ou gravure pour chacun d'eux en manière de pouvoir être placé à califourchon sur le tuyau ou sur autre guide similaire placé dans le terrain suivant un parcours determiné pour le suivre dans son avancement.

Udine, le 17 Avril 1979

Le Mandataire
D'Agostini Dr. Giovanni

0009469

1/1

Fig.1

Fig.2

a

b

c

Le Mandataire
D'Agostini Dr Giov.

Office européen
des brevets

**RAPPORT DE RECHERCHE EUROPEENNE**

0009469

Numéro de la demande

EP 79 83 0012

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | DE - A - 2 451 340 (DAVIER) <br> * Page 3, 2ème paragraphe - page 5; figures * <br><br> -- | 1 | A 01 G 25/09 <br> B 62 D 57/02 |
| A | DE - A - 2 461 710 (SCHLEICH) <br> * Pages 2 et 3; figures 1,2,3 * <br><br> ---- | 1 | |

**DOMAINES TECHNIQUES RECHERCHES (Int. Cl. ³)**

A 01 G
B 62 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche <br> La Haye | Date d'achèvement de la recherche <br> 19-12-1979 | Examinateur <br> HERYGERS |
|---|---|---|

OEB Form 1503.1  06.78